# EUROPEAN PATENT SPECIFICATION

(11) **EP 3 720 245 B1**
(45) Date of publication and mention of the grant of the patent: **24.05.2023**
(21) Application number: 19167197.3
(22) Date of filing: 04.04.2019
(51) Int. Cl.: H05B 6/06

(54) **INDUCTION COOKING DEVICE AND METHOD**
INDUKTIONSKOCHVORRICHTUNG UND -VERFAHREN
DISPOSITIF ET PROCÉDÉ DE CUISSON PAR INDUCTION

(43) Date of publication of application: 07.10.2020
(73) Proprietor: Vestel Elektronik Sanayi ve Ticaret A.S., 45030 Manisa (TR)
(72) Inventor: KARAZOR, Irfan, 45030 Manisa (TR)
(74) Representative: Kehl, Ascherl, Liebhoff & Ettmayr Patentanwälte Partnerschaft mbB

(56) References cited:
- DE-A1- 19 907 596
- JP-A- 2009 011 401
- KR-A- 20070 008 833

## Description

### TECHNICAL FIELD

The invention relates to an induction cooking device. Further, the present invention provides a respective method for operating an induction cooking device.

### BACKGROUND

Although applicable to any inductive heating apparatus, the present invention will mainly be described in conjunction with inductive cooking devices.

In modern cookers energy, and therefore heat, may be transferred to the respective cooking vessel inductively. To this end, an induction coil may be provided under the cooking surface and an alternating field may be generated with the induction coil. The varying magnetic field will then induce a current flow in the bottom surface of the cooking vessel. The current flow will generate heat in the bottom of the cooking vessel and the cooking goods in the cooking vessel will heat up accordingly.

The induction coil and the bottom of the cooking vessel may be seen as a kind of coupled inductances. This means that the magnetic properties of the cooking vessel influence the inductance of the induction coil. It is known that different cooking vessels may comprise different magnetic properties. Therefore, the control of the induction coil is usually adapted to accommodate the different types of cooking vessels.

Further, the coupling factor not only depends on the materials of the coil and the cooking vessel. The coupling factor also depends on the spatial overlap between the induction coil and the cooking vessel. In induction cookers a single hob may e.g. be provided with a plurality of single induction coils that are smaller than the hob. This allows detecting which induction coils are situated directly under the cooking vessel and driving only those induction coils.

However, providing multiple induction coils for every single hob drastically increases the required material and the complexity of the induction cooker, especially the control of the single induction coils.

Accordingly, there is a need for improving the coupling between a cooking vessel and an induction coil with little technical effort.

### SUMMARY OF THE INVENTION

The above stated problem is solved by the features of the independent claims. It is understood, that independent claims of a claim category may be formed in analogy to the dependent claims of another claim category.

Accordingly, it is provided:
An induction cooking device for heating a cooking vessel, the induction cooking device comprising a cooking surface comprising a cooking hob, an induction coil, a driving circuit electrically coupled to the induction coil and configured to drive the induction coil and determine a power level of the electrical power that is transferred to the induction coil while driving the induction coil, and a coil mount that is arranged under the cooking hob, wherein the induction coil is arranged on the coil mount and wherein the coil mount is configured to dynamically adapt the position of the induction coil in a plane parallel to the cooking surface based on the determined power level.

Further, it is provided:
A method for operating an induction cooking device with an induction coil and a driving circuit for heating a cooking vessel, the method comprising determining a power level of the electrical power that is transferred to the induction coil while driving the induction coil with the driving circuit, and dynamically adapting the position of the induction coil in a plane parallel to the cooking surface based on the determined power level.

The present invention is based on the finding that the spatial overlap between the cooking vessel and the induction coil has great influence in the magnetic coupling between the cooking vessel and the induction coil. Further, the amount of power that can be transferred to the cooking vessel depends directly on the magnetic coupling.

Usually, a parallel LC circuit is used to drive the induction coil of an induction cooking device. It is understood, that the term parallel LC circuit may refer to a circuit where the induction coil is the "L" component and a parallel capacitor is provided as the "C" component. The minimum driving current is required if the parallel LC circuit is operated at its' resonant frequency. Further, with a low magnetic coupling between the induction coil and the cooking vessel the impedance of the parallel LC circuit will be lower and the current through the parallel LC circuit will be higher. It is understood, that although not explicitly mentioned, the driving circuit may comprise such a parallel LC circuit and a respective control and switching arrangement.

The present invention therefore provides an induction cooking device that focuses on optimizing the spatial overlap between the cooking vessel and the induction coil.

To this end, the induction cooking device comprises an induction coil that is mounted on a coil mount under the respective cooking hob. The induction coil is driven by a driving circuit. The driving circuit further determines the power level of the electrical power that is provided to the induction coil. The driving circuit operates the induction coil on a given nominal power value, e.g. chosen by the user. With the knowledge of internal variables, like e.g. the operating frequency and the current through the induction coil, the driving circuit may then determine the power transferred to the induction coil and verify if the nominal power value is transferred to the induction coil or if it is not possible to provide the nominal power value to the induction coil. This may be the case e.g. with a cooking vessel that is not placed correctly on the cooking hob. It is understood, that the driving circuit may comprise internal control algorithms, which are not subject to this invention. Such internal control algorithms may e.g. serve to adapt the driving frequency and/or a duty cycle of a driving current for the induction coil. It is further understood, that with the knowledge of such internal variables and e.g. a current measurement of the current through the induction coil or a voltage measurement of the voltage over the induction coil the driving circuit may determine the power level in the induction coil or the power level of the power that is transferred to the cooking vessel.

It is therefore known, if the power level that is provided to the induction coil reaches the nominal power value or not. If the nominal power value - which under normal operating conditions can be met - is not reached, the coil mount may start moving the induction coil to better align the induction coil with the cooking vessel. It is understood, that the diameter of the induction coil may e.g. be smaller than the cooking hob as shown on the cooking surface. For example, the cooking hob may be imprinted as elongated shape on the cooking surface, e.g. a glass surface, while the induction coil may comprise a circular shape.

The coil mount when moving the induction coil may move the induction coil under the cooking surface and search for the optimal position. Moving under the cooking surface refers to a movement in a plane parallel to the cooking surface. This means that the distance between the induction coil and the cooking surface does not change during the movement of the induction coil or changes only within the mechanical tolerances of the coil mount. The optimal position may refer to a position where the power or energy transfer to the cooking vessel is maximized or set to the above-mentioned nominal power value that a user may provide.

Therefore, with the present invention the alignment between the cooking vessel and the induction coil may be optimized. This alignment can be achieved with a very simple mechanical arrangement. Therefore, no complex multi-coil design is required and the overall complexity of the induction cooking device may be kept low.

Further embodiments of the present invention are subject of the further subclaims and of the following description, referring to the drawings.

In an embodiment, the coil mount may be configured to move the induction coil along a first axis, especially a main axis of the cooking hob.

Usually, with a circular cooking hob, the user will place the cooking vessel inside of the visually marked region on the cooking surface. If the cooking vessel is placed eccentrically on the cooking hob, e.g. not in the center of or stands out over the cooking hob, the distance between the center of the induction coil and the center of the cooking vessel may be minimized by moving the induction coil on a single axis, e.g. a straight line that runs through the center of the induction hob.

This means that the distance between the center of the induction coil and the center of the cooking vessel may be minimized without completely aligning both center points. However, this minimization may already be sufficient to improve the magnetic coupling between the induction coil and the cooking vessel to such an extent that the required power level may be transferred to the cooking vessel.

Therefore, a simple one-dimensional or linear movement arrangement in the coil mount may be sufficient to achieve the desired improvement of the magnetic coupling.

If a cooking hob is provided that comprises a circular shape, any axis may be used, especially an axis through the center point of the cooking hob. However, especially for cooking hobs that comprise an elongated or rectangular shape, the main axis of the cooking hob may be used for moving the induction coil. The main axis in this case refers to the axis of maximum spatial extension of the cooking hob.

In a further embodiment, the coil mount may comprise a first linear movement arrangement that may comprise a linear static section and a movable coil carrier. The movable coil carrier may be movably coupled to the static section and may be configured to carry the induction coil along the first axis.

Either the linear static arrangement or the movable coil carrier may comprise a drive, like e.g. an electric motor. For example, an electric motor may be provided on the linear static arrangement that drives a threaded rod or spindle, also called lead screw. The movable coil carrier may comprise the respective nut. The movable coil carrier may then e.g. move in or on a linear bearing when the motor turns.

In another embodiment, the induction cooking device may comprise a control unit that may be coupled to the coil mount. The control unit may be configured to control the coil mount to move the induction coil a single first step in a first direction on the first axis and verify after the first step if the determined power level increases, and to control the coil mount to move the induction coil stepwise in the first direction on the first axis while the determined power level increases with every step, if after the first step the determined power level increases, and to control the coil mount to move the induction coil stepwise in a second direction on the first axis that is opposite to the first direction on the first axis while the determined power level increases with every step, if after the first step the determined power level does not increase.

The control unit may e.g. be a dedicated control unit like a microcontroller or may be integrated in a controller of the driving circuit. The control unit may when initiating the movement of the induction coil in a first step verify if when moving the induction coil in the first direction the determined power level increases. This step serves to verify if the first direction of movement is the correct direction of movement, i.e. the direction in which the cooking vessel is positioned with respect to the induction coil.

If the determined power level increases with this first step of movement, the control unit may continue to move the induction coil in the first direction while the determined power level increases with every step. If, however, with the first step of movement the power level does not increase, the control unit controls the coil mount to move the induction coil in the second direction that is opposite to the first direction while the determined power level increases with every step.

If the power level does not increase more with a further step, the minimum distance between the center point of the cooking vessel and the induction coil or even total alignment is achieved, and no further movement is required.

The term step in this context refers to the minimum movement distance that the coil mount is capable of moving the induction coil. This minimum movement distance may e.g. be defined by a predefined amount of time that the driving element is powered for each step or by the step of a stepper motor used as driving element or the like.

In a further embodiment, the coil mount may be configured to move the induction coil along a second axis that is orthogonal to the first axis.

As explained above, the cooking vessel may be placed by a user eccentrically on the cooking hob, and moving the induction coil on a single axis may minimize the distance between the center point of the cooking vessel and the center point of the induction coil. However, if the user did not place the cooking vessel centrically on the first axis, the distance will only be minimized and the center point of the cooking vessel and the center point of the induction coil will not be totally aligned.

To fully align the center point of the cooking vessel and the center point of the induction coil, the coil mount may be configured to further move the induction coil on the second axis. The coil mount may in this embodiment be a kind of XY table or stage.

Finding the optimal position for the induction coil is therefore performed as a two-phase process. First, the distance between the center point of the cooking vessel and the center point of the induction coil is minimized with regard to the first axis. In the second phase, the distance between the center point of the cooking vessel and the center point of the induction coil regarding the second axis is minimized.

In another embodiment, the coil mount may comprise a second linear movement arrangement that comprises a linear static section and a movable coil carrier that is movably coupled to the static section and is configured to carry the induction coil on the second axis.

The second linear movement arrangement may be provided similar to the first linear movement arrangement. Therefore, either the linear static arrangement or the movable coil carrier may comprise a drive, like e.g. an electric motor. For example, an electric motor may be provided on the linear static arrangement of the second linear movement arrangement that drives a threaded rod or spindle, also called lead screw. The movable coil carrier may comprise the respective nut. The movable coil carrier may then e.g. move in or on a linear bearing when the motor turns.

In yet another embodiment, the control unit may be configured after controlling the coil mount to move the induction coil in the first axis to control the coil mount to move the induction coil a single first step in a first direction on the second axis and verify after the first step if the determined power level increases, and to control the coil mount to move the induction coil stepwise in the first direction on the second axis while the determined power level increases with every step, if after the first step the determined power level increases, and to control the coil mount to move the induction coil stepwise in a second direction on the second axis that is opposite to the first direction on the second axis while the determined power level increases with every step, if after the first step the determined power level does not increase.

After positioning the induction coil on the first axis, the control unit may position the induction coil in the optimal position on the second axis.

As with the first axis, when initiating the movement of the induction coil on the second axis, in a first step the control unit may verify if when moving the induction coil in the first direction on the second axis the determined power level increases. This step serves to verify if the first direction of movement on the second axis is the correct direction of movement, i.e. the direction in which the cooking vessel is positioned with respect to the induction coil.

If the determined power level increases with this first step of movement, the control unit may continue to move the induction coil in the first direction on the second axis while the determined power level increases with every step. If, however, with the first step of movement the power level does not increase, the control unit may control the coil mount to move the induction coil in the second direction on the second axis that is opposite to the first direction on the second axis while the determined power level increases with every step.

If the power level does not increase more with a further step, the minimum distance between the center point of the cooking vessel and the induction coil regarding the second axis or even total alignment is achieved, and no further movement is required.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an induction cooking device according to the present invention;
Fig. 2 shows a block diagram of another embodiment of an induction cooking device according to the present invention;
Fig. 3 shows a block diagram of another embodiment of an induction cooking device according to the present invention; and
Fig. 4 shows a flow diagram of an embodiment of a method according to the present invention.

In the figures like reference signs denote like elements unless stated otherwise.

### DETAILED DESCRIPTION OF THE DRAWINGS

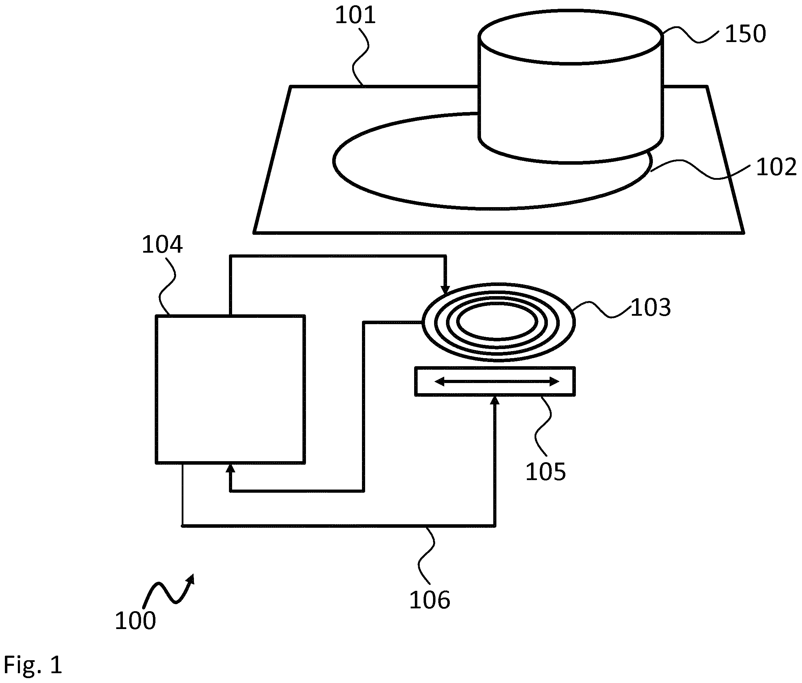

Fig. 1 shows a block diagram of an induction cooking device 100 for heating a cooking vessel 150. The induction cooking device 100 comprises a cooking surface 101 with a cooking hob 102. The cooking surface 101 may also be a glass surface and the cooking hob 102 may be delineated by an imprint on the cooking surface 101. Under the cooking surface 101 an induction coil 103 is provided on a coil mount 105. Further, the induction coil 103 is electrically coupled to a driving circuit 104.

The driving circuit 104 serves for driving the induction coil 103. This means that driving circuit 104 may provide a driving current through the induction coil 103 based e.g. on a user provided power setting for the induction cooking device 100, i.e. based on the nominal power value. The driving circuit 104 is further configured to determine a power level 106 of the electrical power that is transferred to the induction coil 103 while driving the induction coil 103.

The coil mount 105 carries the induction coil 103 and dynamically adapts the position of the induction coil 103 in a plane parallel to the cooking surface 101 based on the determined power level 106. Dynamically adapting the position of the induction coil 103 refers to minimizing the distance between the induction coil 103, especially the center point of the induction coil 103, and the cooking vessel 150, especially the center point of the cooking vessel 150.

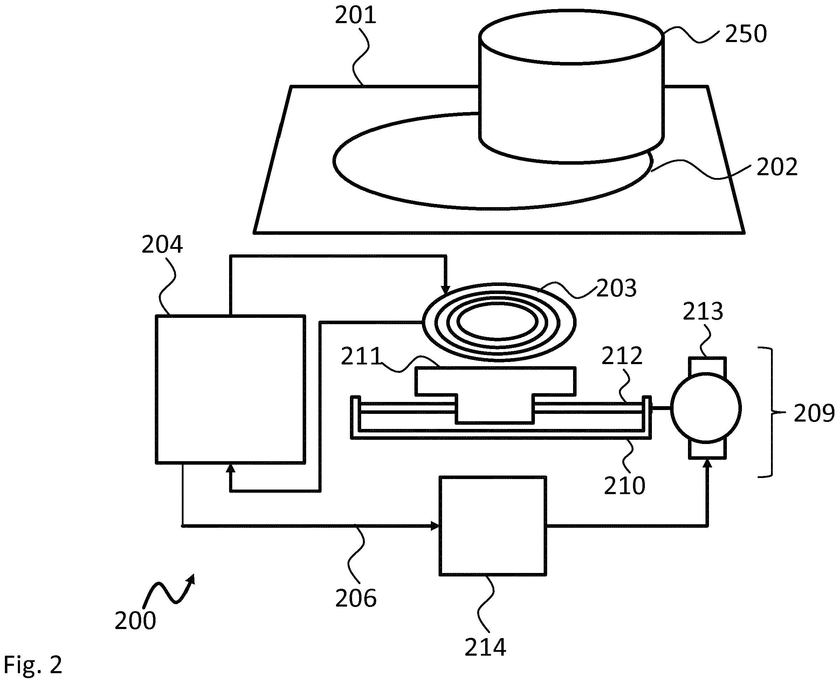

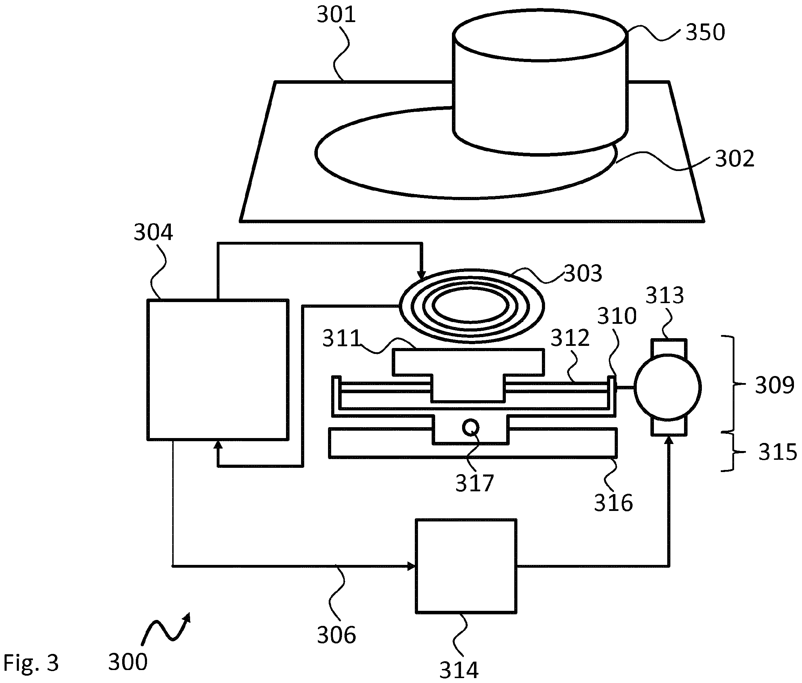

As will be seen below with regard to Figs. 2 and 3, the coil mount 105 may e.g. move the induction coil 103 on a single axis, i.e. a one-dimensional movement is performed. As alternative, the coil mount 105 may move the induction coil 103 on two axes, i.e. a two-dimensional movement is performed.

In the induction cooking device 100 the driving circuit 104 provides the determined power level 106 to the coil mount 105. It is understood, that the coil mount 105 may comprise a dedicated controller for controlling movement of the induction coil 103. As alternative, the driving circuit 104 may also comprise such a controller. Instead of providing the determined power level 106 to the coil mount 105, the controller in the driving circuit 104 may then directly control the movement of the induction coil 103 with the coil mount 105.

Fig. 2 shows a block diagram of another induction cooking device 200. The induction cooking device 200 is based on the induction cooking device 100. Therefore, the induction cooking device 200 comprises a cooking surface 201 with a cooking hob 202. The cooking surface 201 may also be a glass surface and the cooking hob 202 may be delineated by an imprint on the cooking surface 201. Under the cooking surface 201 an induction coil 203 is provided on a coil mount (not explicitly referenced). Further, the induction coil 203 is electrically coupled to a driving circuit 204.

In the induction cooking device 200 the coil mount comprises a first linear movement arrangement 209. The first linear movement arrangement 209 may move the induction coil 203 along a first axis. The first axis may be any axis through the center of the cooking hob 202, especially the main axis of the cooking hob 202.

The first linear movement arrangement 209 comprises a linear static section 210 and a movable coil carrier 211. The movable coil carrier 211 is movably coupled to the static section 210 and carries the induction coil 203. To actively move the movable coil carrier 211, an electric motor 213 with a threaded rod 212 attached to the electric motor 213 are provided. A respective nut is provided on the movable coil carrier 211 (not explicitly shown). Therefore, when the electric motor 213 turns the threaded rod 212, the movable coil carrier 211 is shifted along the first axis with the induction coil 203.

As a controller for the electric motor 213 a control unit 214 is provided. The control unit 214 is coupled to the driving circuit 204 and receives the determined power level 206. Further, the control unit 214 is coupled to the electric motor 213 and controls the movement of the electric motor 213.

In order to align the induction coil 203, the control unit 214 controls the coil mount to move the induction coil 203 a single first step in a first direction on the first axis and verify after the first step if the determined power level 206 increases.

If after the first step the determined power level 206 increases, the control unit 214 controls the coil mount to move the induction coil 203 stepwise in the first direction on the first axis while the determined power level 206 increases with every step. If after the first step the determined power level 206 does not increase, the control unit 214 controls the coil mount to move the induction coil 203 stepwise in a second direction on the first axis that is opposite to the first direction on the first axis while the determined power level 206 increases with every step.

Fig. 3 shows a block diagram of another induction cooking device 300. The induction cooking device 300 is based on the induction cooking device 200. Therefore, the induction cooking device 300 comprises a cooking surface 301 with a cooking hob 302. The cooking surface 301 may also be a glass surface and the cooking hob 302 may be delineated by an imprint on the cooking surface 301. Under the cooking surface 301 an induction coil 303 is provided on a coil mount 305. Further, the induction coil 303 is electrically coupled to a driving circuit 304. In the induction cooking device 300 the coil mount comprises a first linear movement arrangement 309. The first linear movement arrangement 309 may move the induction coil 303 along the first axis, as explained with regard to Fig. 2. The first axis may be any axis through the center of the cooking hob 302, especially the main axis of the cooking hob 302. The first linear movement arrangement 309 comprises a linear static section 310 and a movable coil carrier 311. The movable coil carrier 311 is movably coupled to the static section 310 and carries the induction coil 303. To actively move the movable coil carrier 311 along the first axis, an electric motor 313 with a threaded rod 312 attached to the electric motor 313 are provided. A respective nut is provided on the movable coil carrier 311 (not explicitly shown). Therefore, when the electric motor 313 turns the threaded rod 312, the movable coil carrier 311 is shifted along the first axis with the induction coil 303.

The induction cooking device 300 further allows moving the induction coil 303 on a second axis. The second axis may especially be orthogonal to the first axis. For providing the movement on the second axis, the induction cooking device 300 comprises a second linear movement arrangement 315. The second linear movement arrangement 315 comprises a linear static section 316 and a movable coil carrier that is movably coupled to the static section 316. The movable coil carrier is not separately shown because in the second linear movement arrangement 315 the movable coil carrier is the static section 310 of the first linear movement arrangement 309. Again, a threaded rod 317 with a motor (not explicitly shown for sake of clarity) is provided with the static section 316. A respective nut is provided in the static section 310 of the first linear movement arrangement 309.

The control unit 314 may especially after controlling the first linear movement arrangement 309 to move the induction coil 303 in the first axis, move the induction coil 303 in the second axis.

To this end, the to control unit 314 controls the second linear movement arrangement 315 to move the induction coil 303 a single first step in a first direction on the second axis, and verifies after the first step if the determined power level 306 increases.

If after the first step the determined power level 306 increases, the control unit 314 controls the second linear movement arrangement 315 to move the induction coil 303 stepwise in the first direction on the second axis while the determined power level 306 increases with every step.

If after the first step the determined power level 306 does not increase, the control unit 314 controls the second linear movement arrangement 315 to move the induction coil 303 stepwise in a second direction on the second axis that is opposite to the first direction on the second axis while the determined power level 306 increases with every step.

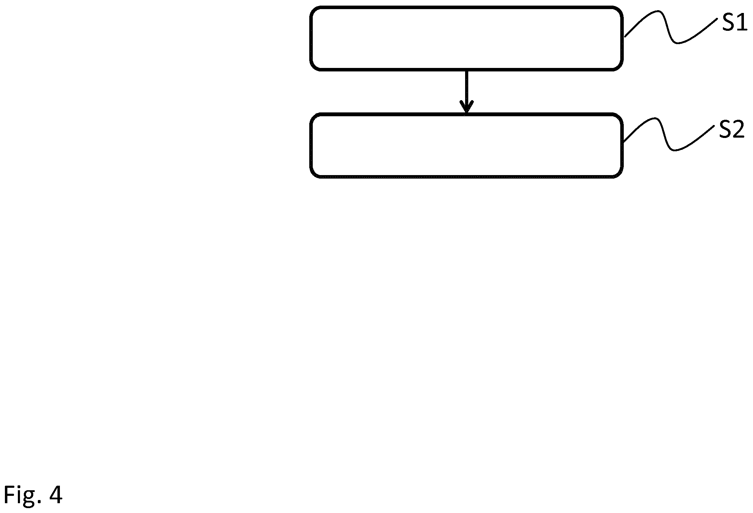

For sake of clarity in the following description of the method-based Fig. 4 the reference signs used above in the description of apparatus-based Figs. 1 - 3 will be maintained.

Fig. 4 shows a flow diagram of a method for operating an induction cooking device 100, 200, 300 with an induction coil 103, 203, 303 and a driving circuit 104, 204, 304 for heating a cooking vessel 150, 250, 350.

The method comprises determining S1 a power level 106, 206, 306 of the electrical power that is transferred to the induction coil 103, 203, 303 while driving the induction coil 103, 203, 303 with the driving circuit 104, 204, 304, and dynamically S2 adapting the position of the induction coil 103, 203, 303 in a plane parallel to the cooking surface 101, 201, 301 based on the determined power level 106, 206, 306.

Dynamically adapting S2 may in one exemplary embodiment comprise moving the induction coil 103, 203, 303 along a first axis, especially a main axis of the cooking hob 102, 202, 302.

In a more specific embodiment, dynamically adapting S2 may comprise moving the induction coil 103, 203, 303 a single first step in a first direction on the first axis and verifying after the first step if the determined power level 106, 206, 306 increases. If after the first step the determined power level 106, 206, 306 increases, the induction coil 103, 203, 303 may be moved stepwise in the first direction on the first axis while the determined power level 106, 206, 306 increases with every step. If after the first step the determined power level 106, 206, 306 does not increase, the induction coil 103, 203, 303 may be moved stepwise in a second direction on the first axis that is opposite to the first direction on the first axis while the determined power level 106, 206, 306 increases with every step.

For moving the induction coil 103, 203, 303 along the first axis, for example, a first linear movement arrangement 209, 309 may be provided that comprises a linear static section 210, 310 and a movable coil carrier 211, 311 that is movably coupled to the static section and is configured to carry the induction coil 103, 203, 303 along the first axis.

As explained above, moving the induction coil 103, 203, 303 along a first axis may already sufficiently optimize the distance between the center of the induction coil 103, 203, 303 and the center of the cooking vessel 150, 250, 350. However, to further optimize the position of the induction coil 103, 203, 303, the induction coil 103, 203, 303 may also be moved on a second axis.

Dynamically adapting S2 may therefore also comprise moving the induction coil 103, 203, 303 along a second axis that is orthogonal to the first axis.

Dynamically adapting S2 may comprise, especially after controlling the coil mount 105 to move the induction coil 103, 203, 303 in the first axis, moving the induction coil 103, 203, 303 a single first step in a first direction on the second axis and verifying after the first step if the determined power level 106, 206, 306 increases. If after the first step the determined power level 106, 206, 306 increases, the induction coil 103, 203, 303 may be moved stepwise in the first direction on the second axis while the determined power level 106, 206, 306 increases with every step. If after the first step the determined power level 106, 206, 306 does not increase, the induction coil 103, 203, 303 may be moved stepwise in a second direction on the second axis that is opposite to the first direction on the second axis while the determined power level 106, 206, 306 increases with every step.

It is understood, that the induction coil 103, 203, 303 may also be moved in the first axis and the second axis at the same time.

Moving the induction coil 103, 203, 303 along the second axis may be performed with a second linear movement arrangement 315 that comprises a linear static section 316 and a movable coil carrier that is movably coupled to the static section and is configured to carry the induction coil 103, 203, 303 on the second axis.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides an induction cooking device 100, 200, 300 for heating a cooking vessel 150, 250, 350, the induction cooking device 100, 200, 300 comprising a cooking surface 101, 201, 301 comprising a cooking hob 102, 202, 302, an induction coil 103, 203, 303, a driving circuit 104, 204, 304 electrically coupled to the induction coil 103, 203, 303 and configured to drive the induction coil 103, 203, 303 and determine a power level 106, 206, 306 of the electrical power that is transferred to the induction coil 103, 203, 303 while driving the induction coil 103, 203, 303, and a coil mount 105 that is arranged under the cooking hob 102, 202, 302, wherein the induction coil 103, 203, 303 is arranged on the coil mount 105 and wherein the coil mount 105 is configured to dynamically adapt the position of the induction coil 103, 203, 303 in a plane parallel to the cooking surface 101, 201, 301 based on the determined power level 106, 206, 306. Further, the present invention provides a respective method for operating an induction cooking device 100, 200, 300.

### List of reference signs

- 100, 200, 300: induction cooking device
- 101, 201, 301: cooking surface
- 102, 202, 302: cooking hob
- 103, 203, 303: induction coil
- 104, 204, 304: driving circuit
- 105: coil mount
- 106, 206, 306: power level

- 209, 309: first linear movement arrangement
- 210, 310: linear static section
- 211, 311: movable coil carrier
- 212, 312: threaded rod
- 213, 313: motor
- 214, 314: control unit

- 315: second linear movement arrangement
- 316: static section
- 317: threaded rod

- 150, 250, 350: cooking vessel

- S1, S2: method steps

## Claims

1. Induction cooking device (100, 200, 300) for heating a cooking vessel (150, 250, 350), the induction cooking device (100, 200, 300) comprising:
a cooking surface (101, 201, 301) comprising a cooking hob (102, 202, 302),
an induction coil (103, 203, 303),
a driving circuit (104, 204, 304) electrically coupled to the induction coil (103, 203, 303) and configured to drive the induction coil (103, 203, 303) and determine a power level (106, 206, 306) of the electrical power that is transferred to the induction coil (103, 203, 303) while driving the induction coil (103, 203, 303), and
a coil mount (105) that is arranged under the cooking hob (102, 202, 302), wherein the induction coil (103, 203, 303) is arranged on the coil mount (105) and wherein the coil mount (105) is configured to dynamically adapt the position of the induction coil (103, 203, 303) in a plane parallel to the cooking surface (101, 201, 301) based on the determined power level (106, 206, 306).

2. Induction cooking device (100, 200, 300) according to claim 1, wherein the coil mount (105) is configured to move the induction coil (103, 203, 303) along a first axis, especially a main axis of the cooking hob (102, 202, 302).

3. Induction cooking device (100, 200, 300) according to claim 2, wherein the coil mount (105) comprises a first linear movement arrangement (209, 309) that comprises a linear static section (210, 310) and a movable coil carrier (211, 311) that is movably coupled to the static section (210, 310) and is configured to carry the induction coil (103, 203, 303) along the first axis.

4. Induction cooking device (100, 200, 300) according to any one of claims 2 and 3, comprising a control unit (214, 314) that is coupled to the coil mount (105) and that is configured
to control the coil mount (105) to move the induction coil (103, 203, 303) a single first step in a first direction on the first axis and verify after the first step if the determined power level (106, 206, 306) increases, and
to control the coil mount (105) to move the induction coil (103, 203, 303) stepwise in the first direction on the first axis while the determined power level (106, 206, 306) increases with every step, if after the first step the determined power level (106, 206, 306) increases, and
to control the coil mount (105) to move the induction coil (103, 203, 303) stepwise in a second direction on the first axis that is opposite to the first direction on the first axis while the determined power level (106, 206, 306) increases with every step, if after the first step the determined power level (106, 206, 306) does not increase.

5. Induction cooking device (100, 200, 300) according to any one of the preceding claims 2 to 4, wherein the coil mount (105) is configured to move the induction coil (103, 203, 303) along a second axis that is orthogonal to the first axis.

6. Induction cooking device (100, 200, 300) according to claim 5, wherein the coil mount (105) comprises a second linear movement arrangement (315) that comprises a linear static section (316) and a movable coil carrier that is movably coupled to the static section (316) and is configured to carry the induction coil (103, 203, 303) on the second axis.

7. Induction cooking device (100, 200, 300) according to any one of claims 5 and 6, wherein the control unit (214, 314) is configured, especially after controlling the coil mount (105) to move the induction coil (103, 203, 303) in the first axis,
to control the coil mount (105) to move the induction coil (103, 203, 303) a single first step in a first direction on the second axis and verify after the first step if the determined power level (106, 206, 306) increases, and
to control the coil mount (105) to move the induction coil (103, 203, 303) stepwise in the first direction on the second axis while the determined power level (106, 206, 306) increases with every step, if after the first step the determined power level (106, 206, 306) increases, and
to control the coil mount (105) to move the induction coil (103, 203, 303) stepwise in a second direction on the second axis that is opposite to the first direction on the second axis while the determined power level (106, 206, 306) increases with every step, if after the first step the determined power level (106, 206, 306) does not increase.

8. Method for operating an induction cooking device (100, 200, 300) with an induction coil (103, 203, 303) and a driving circuit (104, 204, 304) for heating a cooking vessel (150, 250, 350), the method comprising:
determining (S1) a power level (106, 206, 306) of the electrical power that is transferred to the induction coil (103, 203, 303) while driving the induction coil (103, 203, 303) with the driving circuit (104, 204, 304), and
dynamically (S2) adapting the position of the induction coil (103, 203, 303) in a plane parallel to the cooking surface (101, 201, 301) based on the determined power level (106, 206, 306).

9. Method according to claim 8, wherein dynamically adapting comprises moving the induction coil (103, 203, 303) along a first axis, especially a main axis of the cooking hob (102, 202, 302).

10. Method according to claim 9, wherein moving the induction coil (103, 203, 303) along the first axis is performed with a first linear movement arrangement (209, 309) that comprises a linear static section (210, 310) and a movable coil carrier (211, 311) that is movably coupled to the static section (210, 310) and is configured to carry the induction coil (103, 203, 303) along the first axis.

11. Method according to any one of claims 8 and 9, wherein dynamically adapting comprises moving the induction coil (103, 203, 303) a single first step in a first direction on the first axis and verifying after the first step if the determined power level (106, 206, 306) increases, and moving the induction coil (103, 203, 303) stepwise in the first direction on the first axis while the determined power level (106, 206, 306) increases with every step, if after the first step the determined power level (106, 206, 306) increases, and moving the induction coil (103, 203, 303) stepwise in a second direction on the first axis that is opposite to the first direction on the first axis while the determined power level (106, 206, 306) increases with every step, if after the first step the determined power level (106, 206, 306) does not increase.

12. Method according to any one of the preceding claims 8 to 11, wherein dynamically adapting comprises moving the induction coil (103, 203, 303) along a second axis that is orthogonal to the first axis.

13. Method according to claim 12, wherein moving the induction coil (103, 203, 303) along the second axis is performed with a second linear movement arrangement (315) that comprises a linear static section (316) and a movable coil carrier that is movably coupled to the static section (316) and is configured to carry the induction coil (103, 203, 303) on the second axis.

14. Method according to any one of claims 12 and 13, wherein dynamically adapting comprises, especially after controlling the coil mount (105) to move the induction coil (103, 203, 303) in the first axis, moving the induction coil (103, 203, 303) a single first step in a first direction on the second axis and verifying after the first step if the determined power level (106, 206, 306) increases, and moving the induction coil (103, 203, 303) stepwise in the first direction on the second axis while the determined power level (106, 206, 306) increases with every step, if after the first step the determined power level (106, 206, 306) increases, and moving the induction coil (103, 203, 303) stepwise in a second direction on the second axis that is opposite to the first direction on the second axis while the determined power level (106, 206, 306) increases with every step, if after the first step the determined power level (106, 206, 306) does not increase.

## Patentansprüche

1. Induktionskochgerät (100, 200, 300) zum Erhitzen eines Kochgefäßes (150, 250, 350), wobei das Induktionskochgerät (100, 200, 300) umfasst:
eine Kochfläche (101, 201, 301) mit einer Kochplatte (102, 202, 302),
eine Induktionsspule (103, 203, 303),
eine Antriebsschaltung (104, 204, 304), die elektrisch mit der Induktionsspule (103, 203, 303) verbunden ist und zum Ansteuern der Induktionsspule (103, 203, 303) und zur Bestimmung eines Leistungsniveaus (106, 206, 306) der an die Induktionsspule (103, 203, 303) übertragenen elektrischen Leistung beim Ansteuern der Induktionsspule (103, 203, 303) konfiguriert ist, und
eine Spulenhalterung (105), die unterhalb der Kochplatte (102, 202, 302) angeordnet ist, wobei die Induktionsspule (103, 203, 303) auf der Spulenhalterung (105) angeordnet ist und wobei die Spulenhalterung (105) konfiguriert ist, um die Position der Induktionsspule (103, 203, 303) in einer Ebene parallel zur Kochfläche (101, 201, 301) basierend auf dem bestimmten Leistungsniveau (106, 206, 306) dynamisch anzupassen.

2. Induktionskochgerät (100, 200, 300) gemäß Anspruch 1, wobei die Spulenhalterung (105) konfiguriert ist, um die Induktionsspule (103, 203, 303) entlang einer ersten Achse, insbesondere einer Hauptachse der Kochplatte (102, 202, 302), zu bewegen.

3. Induktionskochgerät (100, 200, 300) gemäß Anspruch 2, wobei die Spulenhalterung (105) eine erste lineare Bewegungseinrichtung (209, 309) umfasst, die einen statischen linearen Abschnitt (210, 310) und einen beweglich an den statischen Abschnitt (210, 310) gekoppelten, zum Tragen der Induktionsspule (103, 203, 303) entlang der ersten Achse konfigurierten beweglichen Spulenträger (211, 311) umfasst.

4. Induktionskochgerät (100, 200, 300) gemäß einem der Ansprüche 2 und 3, umfassend eine Steuereinheit (214, 314), die mit der Spulenhalterung (105) gekoppelt ist und die konfiguriert ist,
um die Spulenhalterung (105) zu steuern, um die Induktionsspule (103, 203, 303) in einer ersten Richtung auf der ersten Achse um einen einzigen ersten Schritt zu bewegen und nach dem ersten Schritt zu überprüfen, ob das bestimmte Leistungsniveau (106, 206, 306) zunimmt, und
um die Spulenhalterung (105) zu steuern, um die Induktionsspule (103, 203, 303) schrittweise in der ersten Richtung auf der ersten Achse zu bewegen, während das bestimmte Leistungsniveau (106, 206, 306) bei jedem Schritt zunimmt, falls nach dem ersten Schritt das bestimmte Leistungsniveau (106, 206, 306) zunimmt, und
um die Spulenhalterung (105) zu steuern, um die Induktionsspule (103, 203, 303) schrittweise in einer zweiten Richtung auf der ersten Achse zu bewegen, die der ersten Richtung auf der ersten Achse gegenüberliegend ist, während das bestimmte Leistungsniveau (106, 206, 306) bei jedem Schritt zunimmt, falls nach dem ersten Schritt das bestimmte Leistungsniveau (106, 206, 306) nicht zunimmt.

5. Induktionskochgerät (100, 200, 300) gemäß einem der vorausgehenden Ansprüche 2 bis 4, wobei die Spulenhalterung (105) konfiguriert ist, um die Induktionsspule (103, 203, 303) entlang einer zweiten Achse zu bewegen, die zur ersten Achse orthogonal ist.

6. Induktionskochgerät (100, 200, 300) gemäß Anspruch 5, wobei die Spulenhalterung (105) eine zweite lineare Bewegungseinrichtung (315) umfasst, die einen statischen linearen Abschnitt (316) und einen beweglich an den statischen Abschnitt (316) gekoppelten, zum Tragen der Induktionsspule (103, 203, 303) auf der zweiten Achse konfigurierten beweglichen Spulenträger umfasst.

7. Induktionskochgerät (100, 200, 300) gemäß einem der Ansprüche 5 und 6, wobei die Steuereinheit (214, 314) insbesondere nachdem sie die Spulenhalterung (105) gesteuert hat, um die Induktionsspule (103, 203, 303) in der ersten Achse zu bewegen, konfiguriert ist,
um die Spulenhalterung (105) zu steuern, um die Induktionsspule (103, 203, 303) in einer ersten Richtung auf der zweiten Achse um einen einzigen ersten Schritt zu bewegen und nach dem ersten Schritt zu überprüfen, ob das bestimmte Leistungsniveau (106, 206, 306) zunimmt, und
um die Spulenhalterung (105) zu steuern, um die Induktionsspule (103, 203, 303) schrittweise in der ersten Richtung auf der zweiten Achse zu bewegen, während das bestimmte Leistungsniveau (106, 206, 306) bei jedem Schritt zunimmt, falls nach dem ersten Schritt das bestimmte Leistungsniveau (106, 206, 306) zunimmt, und
um die Spulenhalterung (105) zu steuern, um die Induktionsspule (103, 203, 303) schrittweise in einer zweiten Richtung auf der zweiten Achse zu bewegen, die der ersten Richtung auf der zweiten Achse gegenüberliegend ist, während das bestimmte Leistungsniveau (106, 206, 306) bei jedem Schritt zunimmt, falls nach dem ersten Schritt das bestimmte Leistungsniveau (106, 206, 306) nicht zunimmt.

8. Verfahren zum Betreiben eines Induktionskochgeräts (100, 200, 300) mit einer Induktionsspule (103, 203, 303) und einer Antriebsschaltung (104, 204, 304) zum Erhitzen eines Kochgefäßes (150, 250, 350), wobei das Verfahren umfasst:
Bestimmen (S1) eines Leistungsniveaus (106, 206, 306) der an die Induktionsspule (103, 203, 303) übertragenen elektrischen Leistung beim Ansteuern der Induktionsspule (103, 203, 303) mit der Antriebsschaltung (104, 204, 304), und
Dynamisches (S2) Anpassen der Position der Induktionsspule (103, 203, 303) in einer Ebene parallel zur Kochfläche (101, 201, 301) basierend auf dem bestimmten Leistungsniveau (106, 206, 306).

9. Verfahren gemäß Anspruch 8, bei dem das dynamische Anpassen das Bewegen der Induktionsspule (103, 203, 303) entlang einer ersten Achse, insbesondere einer Hauptachse des Kochfelds (102, 202, 302), umfasst.

10. Verfahren gemäß Anspruch 9, bei dem das Bewegen der Induktionsspule (103, 203, 303) entlang der ersten Achse mit einer ersten linearen Bewegungseinrichtung (209, 309) durchgeführt wird, die einen statischen linearen Abschnitt (210, 310) und einen beweglich an den statischen Abschnitt (210, 310) gekoppelten, zum Tragen der Induktionsspule (103, 203, 303) entlang der ersten Achse konfigurierten beweglichen Spulenträger (211, 311) umfasst.

11. Verfahren gemäß einem der Ansprüche 8 und 9, bei dem das dynamische Anpassen umfasst das Bewegen der Induktionsspule (103, 203, 303) um einen einzigen ersten Schritt in einer ersten Richtung auf der ersten Achse und das Überprüfen nach dem ersten Schritt, ob das bestimmte Leistungsniveau (106, 206, 306) zunimmt, und das Bewegen der Induktionsspule (103, 203, 303) schrittweise in der ersten Richtung auf der ersten Achse, während das bestimmte Leistungsniveau (106, 206, 306) bei jedem Schritt zunimmt, falls nach dem ersten Schritt das bestimmte Leistungsniveau (106, 206, 306) zunimmt, und das Bewegen der Induktionsspule (103, 203, 303) schrittweise in einer zweiten Richtung auf der ersten Achse, die der ersten Richtung auf der ersten Achse gegenüberliegt, während das bestimmte Leistungsniveau (106, 206, 306) bei jedem Schritt zunimmt, falls nach dem ersten Schritt das bestimmte Leistungsniveau (106, 206, 306) nicht zunimmt.

12. Verfahren gemäß einem der vorangehenden Ansprüche 8 bis 11, bei dem das dynamische Anpassen das Bewegen der Induktionsspule (103, 203, 303) entlang einer zweiten Achse umfasst, die zur ersten Achse orthogonal ist.

13. Verfahren gemäß Anspruch 12, bei dem das Bewegen der Induktionsspule (103, 203, 303) entlang der zweiten Achse mit einer zweiten linearen Bewegungseinrichtung (315) durchgeführt wird, die einen statischen linearen Abschnitt (316) und einen beweglich an den statischen Abschnitt (316) gekoppelten, zum Tragen der Induktionsspule (103, 203, 303) auf der zweiten Achse konfigurierten beweglichen Spulenträger umfasst.

14. Verfahren gemäß einem der Ansprüche 12 und 13, bei dem das dynamische Anpassen, insbesondere nach dem Steuern der Spulenhalterung (105) zum Bewegen der Induktionsspule (103, 203, 303) in der ersten Achse, umfasst das Bewegen der Induktionsspule (103, 203, 303) um einen einzigen ersten Schritt in einer ersten Richtung auf der zweiten Achse und das Überprüfen nach dem ersten Schritt, ob das bestimmte Leistungsniveau (106, 206, 306) zunimmt, und das Bewegen der Induktionsspule (103, 203, 303) schrittweise in der ersten Richtung auf der zweiten Achse, während das bestimmte Leistungsniveau (106, 206, 306) bei jedem Schritt zunimmt, falls nach dem ersten Schritt das bestimmte Leistungsniveau (106, 206, 306) zunimmt, und das Bewegen der Induktionsspule (103, 203, 303) schrittweise in einer zweiten Richtung auf der zweiten Achse, die der ersten Richtung auf der zweiten Achse gegenüberliegt, während das bestimmte Leistungsniveau (106, 206, 306) bei jedem Schritt zunimmt, falls nach dem ersten Schritt das bestimmte Leistungsniveau (106, 206, 306) nicht zunimmt.

## Revendications

1. Dispositif de cuisson par induction (100, 200, 300) pour chauffer un récipient de cuisson (150, 250, 350), le dispositif de cuisson par induction (100, 200, 300) comprenant :
une surface de cuisson (101, 201, 301) comprenant une plaque de cuisson (102, 202, 302),
une bobine d'induction (103, 203, 303),
un circuit de commande (104, 204, 304) couplé électriquement à la bobine d'induction (103, 203, 303) et configuré pour commander la bobine d'induction (103, 203, 303) et déterminer un niveau de puissance (106, 206, 306) de la puissance électrique qui est transférée à la bobine d'induction (103, 203, 303) tout en commandant la bobine d'induction (103, 203, 303), et
un support de bobine (105) qui est disposé sous la plaque de cuisson (102, 202, 302), dans lequel la bobine d'induction (103, 203, 303) est disposée sur le support de bobine (105) et dans lequel le support de bobine (105) est configuré pour adapter dynamiquement la position de la bobine d'induction (103, 203, 303) dans un plan parallèle à la surface de cuisson (101, 201, 301) sur la base du niveau de puissance déterminé (106, 206, 306).

2. Dispositif de cuisson par induction (100, 200, 300) selon la revendication 1, dans lequel le support de bobine (105) est configuré pour déplacer la bobine d'induction (103, 203, 303) le long d'un premier axe, notamment un axe principal de la plaque de cuisson (102, 202, 302).

3. Dispositif de cuisson par induction (100, 200, 300) selon la revendication 2, dans lequel le support de bobine (105) comprend un premier agencement de mouvement linéaire (209, 309) qui comprend une section statique linéaire (210, 310) et un support de bobine mobile (211, 311) qui est couplé de manière mobile à la section statique (210, 310) et est configuré pour porter la bobine d'induction (103, 203, 303) le long du premier axe.

4. Dispositif de cuisson par induction (100, 200, 300) selon l'une quelconque des revendications 2 et 3, comprenant une unité de commande (214, 314) qui est couplée au support de bobine (105) et qui est configurée pour
à commander le support de bobine (105) pour déplacer la bobine d'induction (103, 203, 303) d'un premier pas unique dans une première direction sur le premier axe et vérifier après le premier pas si le niveau de puissance déterminé (106, 206, 306) augmente, et
commander le support de bobine (105) pour déplacer la bobine d'induction (103, 203, 303) par étapes dans la première direction sur le premier axe tandis que le niveau de puissance déterminé (106, 206, 306) augmente à chaque étape, si après la première étape le niveau de puissance déterminé (106, 206, 306) augmente, et
pour commander le support de bobine (105) pour déplacer la bobine d'induction (103, 203, 303) pas à pas dans une seconde direction sur le premier axe qui est opposée à la première direction sur le premier axe tandis que le niveau de puissance déterminé (106, 206, 306) augmente à chaque pas, si après le premier pas le niveau de puissance déterminé (106, 206, 306) n'augmente pas.

5. Dispositif de cuisson par induction (100, 200, 300) selon l'une quelconque des revendications précédentes 2 à 4, dans lequel le support de bobine (105) est configuré pour déplacer la bobine d'induction (103, 203, 303) le long d'un deuxième axe qui est orthogonal au premier axe.

6. Dispositif de cuisson par induction (100, 200, 300) selon la revendication 5, dans lequel le support de bobine (105) comprend un second agencement de mouvement linéaire (315) qui comprend une section statique linéaire (316) et un support de bobine mobile qui est couplé de manière mobile à la section statique (316) et est configuré pour porter la bobine d'induction (103, 203, 303) sur le second axe.

7. Dispositif de cuisson par induction (100, 200, 300) selon l'une quelconque des revendications 5 et 6, dans lequel l'unité de commande (214, 314) est configurée, notamment après avoir commandé le support de bobine (105) pour déplacer la bobine d'induction (103, 203, 303) sur le premier axe,
pour commander le support de bobine (105) afin de déplacer la bobine d'induction (103, 203, 303) d'un seul premier pas dans une première direction sur le deuxième axe et vérifier après le premier pas si le niveau de puissance déterminé (106, 206, 306) augmente, et
commander le support de bobine (105) pour déplacer la bobine d'induction (103, 203, 303) pas à pas dans la première direction sur le deuxième axe tandis que le niveau de puissance déterminé (106, 206, 306) augmente à chaque pas, si après le premier pas le niveau de puissance déterminé (106, 206, 306) augmente, et
pour commander le support de bobine (105) afin de déplacer la bobine d'induction (103, 203, 303) pas à pas dans une deuxième direction sur le deuxième axe qui est opposée à la première direction sur le deuxième axe tandis que le niveau de puissance déterminé (106, 206, 306) augmente à chaque pas, si après le premier pas le niveau de puissance déterminé (106, 206, 306) n'augmente pas.

8. Méthode pour faire fonctionner un dispositif de cuisson par induction (100, 200, 300) avec une bobine d'induction (103, 203, 303) et un circuit de commande (104, 204, 304) pour chauffer un récipient de cuisson (150, 250, 350), la méthode comprenant :
déterminer (S1) un niveau de puissance (106, 206, 306) de l'énergie électrique qui est transférée à la bobine d'induction (103, 203, 303) tout en entraînant la bobine d'induction (103, 203, 303) avec le circuit d'entraînement (104, 204, 304), et
adapter dynamiquement (S2) la position de la bobine d'induction (103, 203, 303) dans un plan parallèle à la surface de cuisson (101, 201, 301) sur la base du niveau de puissance déterminé (106, 206, 306).

9. Méthode selon la revendication 8, dans laquelle l'adaptation dynamique comprend le déplacement de la bobine d'induction (103, 203, 303) selon un premier axe, notamment un axe principal de la plaque de cuisson (102, 202, 302).

10. Méthode selon la revendication 9, dans laquelle le déplacement de la bobine d'induction (103, 203, 303) le long du premier axe est effectué avec un premier agencement de mouvement linéaire (209, 309) qui comprend une section statique linéaire (210, 310) et un support de bobine mobile (211, 311) qui est couplé de manière mobile à la section statique (210, 310) et est configuré pour porter la bobine d'induction (103, 203, 303) le long du premier axe.

11. Méthode selon l'une quelconque des revendications 8 et 9, dans laquelle l'adaptation dynamique comprend le déplacement de la bobine d'induction (103, 203, 303) d'une seule première étape dans une première direction sur le premier axe et la vérification après la première étape si le niveau de puissance déterminé (106, 206, 306) augmente, et le déplacement de la bobine d'induction (103, 203, 303) par étapes dans la première direction sur le premier axe tandis que le niveau de puissance déterminé (106, 206, 306) augmente à chaque étape, si après la première étape le niveau de puissance déterminé (106, 206, 306) augmente, et le déplacement de la bobine d'induction (103, 203, 303) par étapes dans une seconde direction sur le premier axe qui est opposée à la première direction sur le premier axe tandis que le niveau de puissance déterminé (106, 206, 306) augmente à chaque étape, si après la première étape le niveau de puissance déterminé (106, 206, 306) n'augmente pas.

12. Méthode selon l'une quelconque des revendications précédentes 8 à 11, dans laquelle l'adaptation dynamique comprend le déplacement de la bobine d'induction (103, 203, 303) le long d'un deuxième axe qui est orthogonal au premier axe.

13. Méthode selon la revendication 12, dans laquelle le déplacement de la bobine d'induction (103, 203, 303) le long du deuxième axe est effectué avec un deuxième agencement de mouvement linéaire (315) qui comprend une section statique linéaire (316) et un support de bobine mobile qui est couplé de manière mobile à la section statique (316) et est configuré pour porter la bobine d'induction (103, 203, 303) sur le deuxième axe.

14. Méthode selon l'une quelconque des revendications 12 et 13, dans laquelle l'adaptation dynamique comprend, notamment après avoir commandé le support de bobine (105) pour déplacer la bobine d'induction (103, 203, 303) dans le premier axe, le déplacement de la bobine d'induction (103, 203, 303) d'un seul premier pas dans une première direction sur le deuxième axe et la vérification après le premier pas si le niveau de puissance déterminé (106, 206, 306) augmente, et le déplacement de la bobine d'induction (103, 203, 303) pas à pas dans la première direction sur le deuxième axe tandis que le niveau de puissance déterminé (106, 206, 306) augmente à chaque pas, si après le premier pas le niveau de puissance déterminé (106, 206, 306) augmente, et déplacer la bobine d'induction (103, 203, 303) pas à pas dans une deuxième direction sur le deuxième axe qui est opposée à la première direction sur le deuxième axe tandis que le niveau de puissance déterminé (106, 206, 306) augmente à chaque pas, si après le premier pas le niveau de puissance déterminé (106, 206, 306) n'augmente pas.
